# FASCICULE DE BREVET EUROPEEN

(11) **EP 2 783 147 B1**
(45) Date de publication et mention de la délivrance du brevet: **14.12.2016**
(21) Numéro de dépôt: 13715289.8
(22) Date de dépôt: 08.03.2013
(51) Int. Cl.: F16L 39/04, B67C 3/22

(54) **DISTRIBUTEUR FLUIDIQUE MUNI D'UNE SÉRIE DE CONNECTEURS PÉRIPHÉRIQUES**
FLÜSSIGKEITSSPENDER MIT EINER REIHE AUS PERIPHEREN VERBINDERN
FLUID DISPENSER PROVIDED WITH A SERIES OF PERIPHERAL CONNECTORS

(30) Priorité: 23.03.2012 FR 1252659
(43) Date de publication de la demande: 01.10.2014
(73) Titulaire: Sidel Participations, 76930 Octeville sur Mer (FR)
(72) Inventeur: DULONG, Vincent, 76930 Octeville Sur Mer (FR)
(74) Mandataire: Grassin d'Alphonse, Emmanuel Jean Marie
(86) Numéro de dépôt international: PCT/FR2013/050498
(87) Numéro de publication internationale: WO 2013/140063

(56) Documents cités:
- EP-A2- 1 898 139
- DE-A1-102010 035 761
- DE-U1-202008 003 352
- US-A- 2 257 427

## Description

L'invention concerne un distributeur fluidique, notamment pour une machine de remplissage de récipients, ou pour une machine de formage de récipients régulée thermiquement par fluide caloporteur.

Une telle machine comprend généralement un arbre central d'alimentation fluidique (par exemple un liquide de remplissage, de rinçage, de refroidissement ou de chauffe, ou encore de l'air comprimé ou un gaz tel que du dioxyde de carbone destiné aux boissons carbonatées).

L'arbre central est fixe ; il est relié à une tuyauterie d'alimentation ou un réservoir contenant le fluide de remplissage. La machine comprend par ailleurs un carrousel tournant sur lequel sont montées des unités de traitement (par exemple remplissage ou formage de récipients).

Des tubulures, rigides ou souples, solidaires du carrousel, mettent en communication fluidique l'arbre central avec chaque unité de traitement, cf. par ex. les documents EP 1 898 139 A2 ou FR 2 950 609 (ou son équivalent
international WO 2011/039270).

Les tubulures sont raccordées à l'arbre central par l'intermédiaire d'un distributeur fluidique à joint tournant, qui assure l'étanchéité de ce raccordement tout en permettant la rotation continue du carrousel (et donc des tubulures) par rapport à l'arbre pendant l'alimentation fluidique, cf. par ex. le brevet américain US 6 305 437.

Si les distributeurs fluidiques connus (cf. par exemple le document US 2008/302994) donnent en général satisfaction, leur capacité (c'est-à-dire leur nombre de sorties, correspondant au nombre de tubulures à alimenter de manière simultanée, demeure limité. A titre d'exemple, les distributeurs de la série LT commercialisée par la société DSTI offrent une capacité maximale de 24 sorties (modèle LT 24). Un tel distributeur ne permet d'alimenter, sur une machine de soufflage, que six unités de soufflage, chacune possédant en effet un double circuit de refroidissement avec, pour chaque circuit, une entrée et une sortie.

On peut certes augmenter la capacité d'un tel distributeur en le rallongeant (tout en l'élargissant, afin d'augmenter le volume de matière disponible pour permettre le perçage de conduits additionnels). Il en résulte toutefois un encombrement axial accru, ainsi que des pertes de charge potentielles aux sorties les plus éloignées du réservoir.

En outre, le nombre d'unités de traitement équipant une même machine peut varier selon la production. Dans un tel cas, la machine peut être équipée soit d'un distributeur particulier pour chaque gamme de production (ce qui nécessite de remplacer le distributeur lors du passage d'une gamme à l'autre), soit d'un distributeur unique dont une partie des sorties peuvent être obturées lorsqu'elles ne sont pas utilisées, dans l'hypothèse où le nombre total de sorties est supérieur au nombre d'unités de traitement. Cette deuxième option est préférable à la première puisqu'elle nécessite une intervention plus limitée, mais elle suppose d'équiper les machines de distributeurs dont la capacité (et donc l'encombrement) est systématiquement surdimensionnée.

Le besoin persiste par conséquent de proposer un distributeur fluidique offrant une capacité modulable selon le besoin tout en présentant une bonne compacité.

A cet effet, il est proposé, en premier lieu, un distributeur fluidique selon la revendication 1 et de ce fait comprenant un joint tournant muni d'un alésage central pour son raccordement à un arbre d'alimentation fluidique, et d'une série périphérique de conduits percés radialement dans le joint, chaque conduit débouchant sur une face externe du joint en un orifice de sortie, ce distributeur comprenant en outre une série périphérique de connecteurs montés de manière amovible sur la face externe du joint, chaque connecteur ayant :
- au moins un orifice d'entrée en communication fluidique avec un orifice de sortie du joint tournant ;
- un groupe d'au moins deux canaux qui communiquent avec un même orifice d'entrée et débouchent sur une face externe du connecteur en deux orifices de sortie distincts.

Ce distributeur offre un bon compromis entre compacité et capacité, et simplifie tout en le facilitant le raccordement et le démontage des tubulures.

Diverses caractéristiques supplémentaires peuvent être prévues, seules ou en combinaison :
- les canaux d'un même groupe sont décalés angulairement ;
- les canaux d'un même groupe sont décalés angulairement d'un angle supérieur ou égal à 10° ;
- le joint tournant comprend des rangées axiales d'orifices de sortie, réparties de manière périphérique sur la face externe du joint ;
- chaque connecteur comprend une rangée axiale d'orifices d'entrée et, pour chaque orifice d'entrée, un groupe de canaux ;
- chaque groupe comprend deux canaux ;
- les canaux d'un même groupe sont décalés angulairement d'un angle de 30° environ ;
- chaque groupe comprend trois canaux ;
- les canaux d'un même groupe sont décalés angulairement deux à deux d'un angle de 15° environ ;
- Le distributeur comprend une bague d'étanchéité montée à cheval entre chaque orifice de sortie et chaque orifice d'entrée correspondant ;
- chaque connecteur comprend, pour chaque canal, un embout d'accouplement à une tubulure d'acheminement fluidique ;
- chaque canal présente intérieurement, du côté de son orifice de sortie, un lamage,
- chaque embout est monté intérieurement dans le canal et présente un épaulement en butée contre le lamage, et un corps principal faisant saillie du connecteur par l'orifice de sortie du canal ;
- chaque embout est maintenu sur le connecteur au moyen d'un circlips reçu dans une gorge périphérique formée dans le corps principal de l'embout ;
- une rondelle est interposée entre la face externe du connecteur et le circlips ;
- la face externe du connecteur comprend plusieurs facettes sur lesquelles débouchent les orifices de sortie des canaux ;
- les connecteurs sont montés sur la face externe du joint au moyen de vis de fixation passant au travers de trous formés dans des facettes des connecteurs.

Il est proposé, en deuxième lieu, une machine de traitement de récipients qui comprend un arbre central d'alimentation fluidique, un carrousel sur lequel sont montées des unités de traitement des récipients, et une pluralité de tubulures mettant chacune en communication fluidique l'arbre central avec une unité de traitement, ainsi qu'un distributeur tel que présenté ci-dessus, monté en rotation sur l'arbre central, les tubulures étant branchées par grappes sur le joint par l'intermédiaire des connecteurs.

D'autres objets et avantages de l'invention apparaîtront à la lumière de la description d'un mode préféré de réalisation, faite ci-après en référence aux dessins annexés dans lesquels :
- la figure 1 est une vue schématique illustrant une machine de remplissage équipée d'un distributeur fluidique ;
- la figure 2 est une vue en perspective illustrant un distributeur fluidique ;
- la figure 3 est une vue en coupe horizontale du distributeur fluidique de la figure 2 ;
- la figure 4 est une vue de détail du distributeur de la figure 3, prise dans l'encart IV ;
- la figure 5 est une vue en coupe verticale du distributeur de la figure 3 ;
- la figure 6 est une vue similaire à la figure 4, montrant le distributeur éclaté pour illustrer son montage.

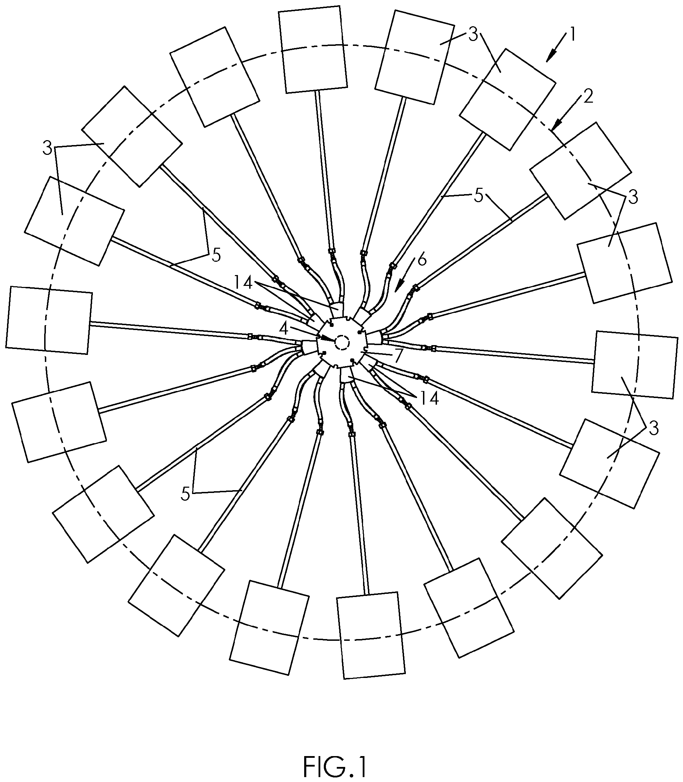

On a représenté schématiquement sur la figure 1 une machine 1 de traitement (par exemple remplissage ou formage) de récipients qui comprend un carrousel **2** tournant sur lequel sont montées des unités **3** de traitement des récipients. Dans l'exemple de la figure 1, les unités **3** de traitement sont au nombre de 18, mais ce nombre peut être supérieur (par exemple 24).

Le fluide circulant dans la machine **1** peut être un liquide (par exemple une boisson, un liquide de rinçage, qui peut emprunter le même circuit que la boisson lors d'une opération de rinçage de la machine **1,** ou encore un liquide de refroidissement ou de chauffe, tel que de l'eau, lorsque les unités **3** de traitement sont des moules au sein desquels sont formés les récipients), un gaz (par exemple de l'azote ou encore du dioxyde de carbone), une mousse, ou encore un gel.

Pour les détails de réalisation du carrousel **2** et des unités **3** de traitement, on pourra se référer au document WO 2011/039270 précité qui décrit l'architecture d'une machine de remplissage.

La machine **1** comprend également un arbre **4** central d'alimentation (et/ou d'évacuation) fluidique relié à un réservoir (non représenté) qui peut être déporté, ainsi qu'une pluralité de tubulures **5** qui mettent en communication fluidique l'arbre central avec une unité **3** de traitement.

Ces tubulures **5** peuvent être rigides (par exemple sous forme de tubes d'acier, de cuivre ou de laiton), ou souples (sous forme de flexibles en caoutchouc, éventuellement doublés de chemises en fil de métal tissé). Dans le cas d'une machine de remplissage, les tubulures **5** ont toutes pour fonction d'acheminer le fluide vers les unités **3** de traitement. Dans le cas d'une machine de formage, seules certaines des tubulures **5** ont pour fonction d'acheminer le fluide caloporteur vers les unités **3** de traitement, les autres tubulures **5** ayant pour fonction inverse de renvoyer le fluide caloporteur vers l'arbre **4,** pour former un circuit fermé. Dans certaines machines de formage, où chaque unité de moulage comprend chacune un moule dont on refroidit séparément une paroi et un fond, quatre tubulures **5** sont branchées sur chaque unité : deux tubulures d'alimentation, et deux tubulures d'évacuation. Tel est le cas dans l'exemple illustré sur la figure 1.

La machine 1 comprend en outre un distributeur **6** qui assure le raccordement tournant des tubulures **5** (solidaires en rotation du carrousel **2**) à l'arbre **4** central d'alimentation fluidique (fixe). Le distributeur 6 est configuré pour assurer l'étanchéité du raccordement tout en permettant une circulation fluidique continue pendant la rotation du carrousel **2.**

A cet effet, le distributeur **6** comprend un joint **7** tournant ayant un noyau sous forme d'un bloc en métal ou en matière plastique, muni d'un alésage **8** central par lequel le joint **7** est monté en rotation sur l'arbre **4,** auquel il est ainsi raccordé fluidiquement.

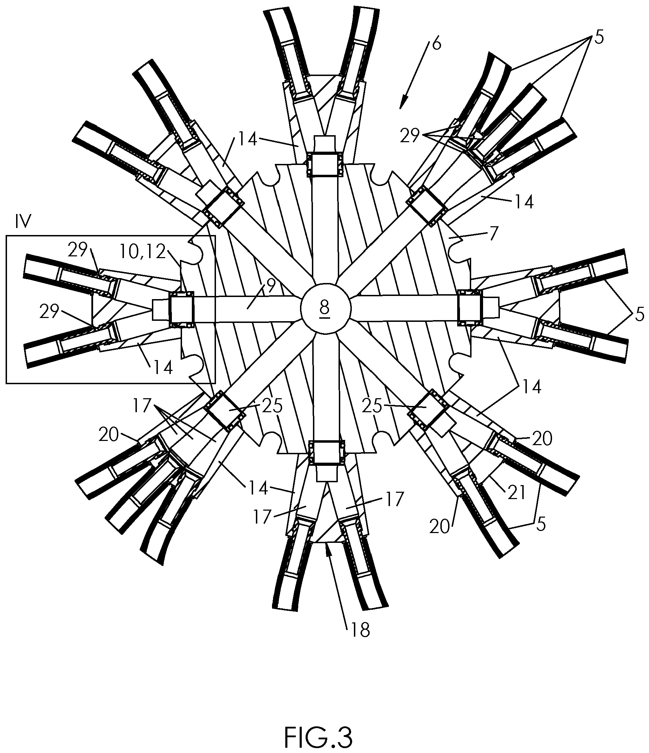

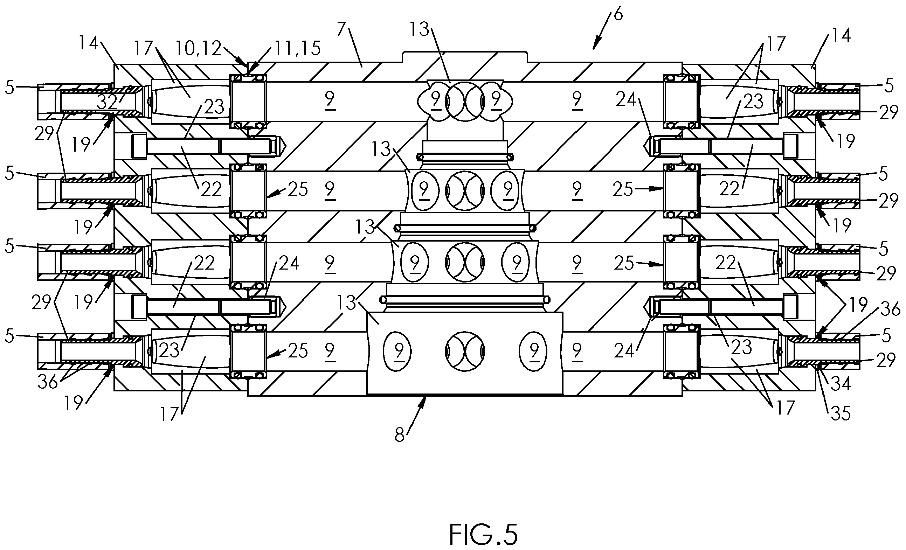

Comme on le voit sur les figures 3 et 5, le joint **7** est muni d'une série périphérique de conduits **9** percés radialement à partir de l'alésage **8** central, et qui débouchent chacun sur une face **10** externe du joint **7** en un orifice **11** de sortie. En section horizontale, le joint **7** présente une forme polygonale (par exemple hexagonale ou, comme dans le mode de réalisation illustré, octogonale), la face **10** externe étant divisée en une série de méplats **12,** au nombre de huit dans l'exemple illustré.

Comme illustré sur la figure 5, l'alésage **8** central est étagé et comprend une succession de quatre chambres **13** coaxiales successives de diamètres dégressifs, tandis que le joint **7** comprend quatre séries superposées de conduits **9** qui débouchent respectivement dans chacune des chambres **13.** Dans ce mode de réalisation, on comprend que l'arbre **4** central est également étagé, et comprend plusieurs tubes coaxiaux de longueurs différentes, qui débouchent chacun dans une chambre **13** différente. Dans le cas d'une machine **1** de formage, où la circulation fluidique vise à réguler thermiquement les moules de formage des récipients, au moins un tube achemine le fluide depuis le réservoir vers le distributeur **6,** tandis qu'au moins un autre tube achemine à l'inverse le fluide depuis le distributeur **6** vers le réservoir, pour assurer la circulation en circuit fermé et le recyclage du fluide.

Dans ce même exemple, les séries superposées de conduits **9** débouchent sur la face **10** externe en des orifices **11** de sortie répartis de manière périphérique sur la face **10** externe du joint, les orifices **11** étant groupés par rangées axiales sur les méplats **12.**

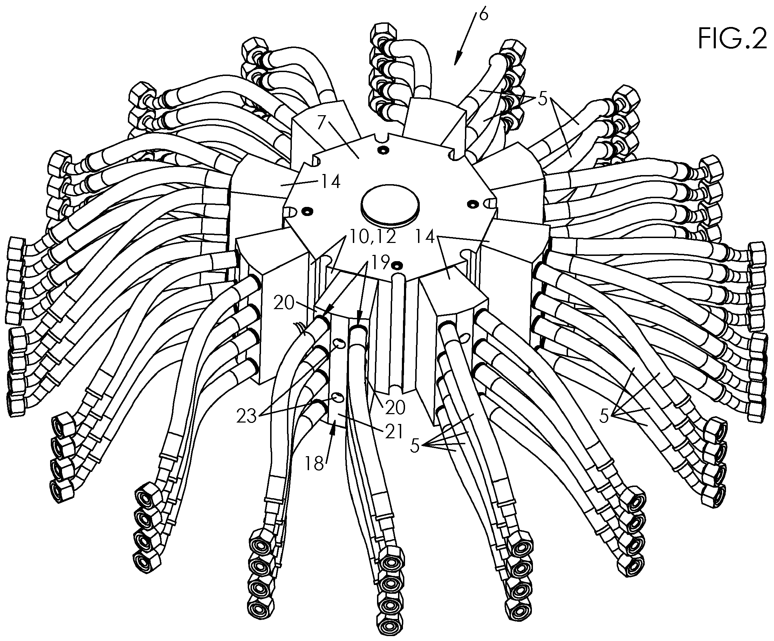

Comme on le voit sur les figures 2, 3 et 5, le distributeur **6** comprend en outre une série périphérique de connecteurs **14** par l'intermédiaire desquels les tubulures **5** sont branchées par grappes sur le joint **7.**

Chaque connecteur **14,** réalisé dans un bloc de métal ou de plastique, est monté de manière amovible sur la face **10** externe du joint **7**, et plus précisément sur un méplat **12.** Le connecteur **14** a pour fonction de diviser le flux issu de chaque orifice **11** de sortie en au moins deux flux secondaires vers deux tubulures **5** distinctes, ou à l'inverse de regrouper les flux issus d'au moins deux tubulures **5** distinctes en un flux unique au niveau de chaque orifice **11** du joint **7,** le distributeur **6** remplissant alors le rôle d'un collecteur.

A cet effet, chaque connecteur **14** comprend, pour chaque orifice **11** de sortie du joint **7** tournant :
- au moins un orifice **15** d'entrée débouchant sur une face **16** interne du connecteur **14,** cet orifice **15** d'entrée étant en communication fluidique avec un orifice **11** de sortie du joint **7** ;
- un groupe d'au moins deux canaux **17** de division fluidique, qui communiquent avec le même orifice **15** d'entrée et débouchent sur une face **18** externe du connecteur en deux orifices **19** de sortie distincts.

Dans l'exemple de réalisation illustré, chaque connecteur **14** comprend une rangée axiale (verticale dans l'exemple illustré) d'orifices **15** d'entrée destinés à être mis en communication avec les orifices **11** de sortie d'une même rangée axiale du joint **7.**

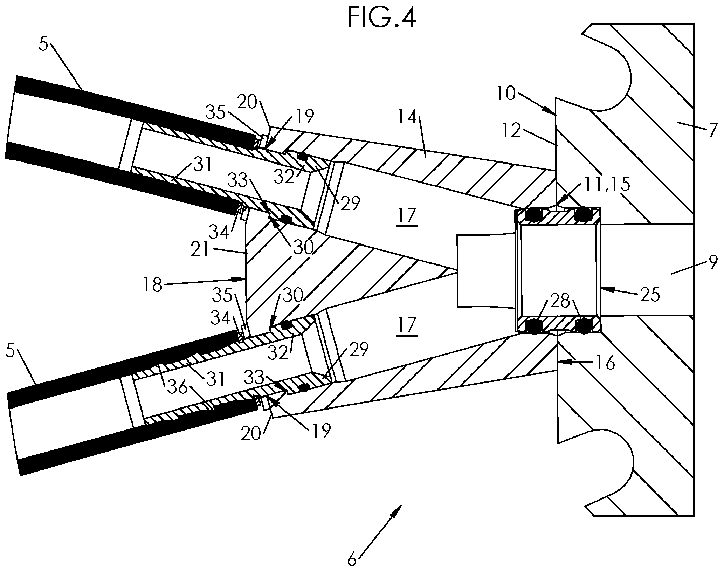

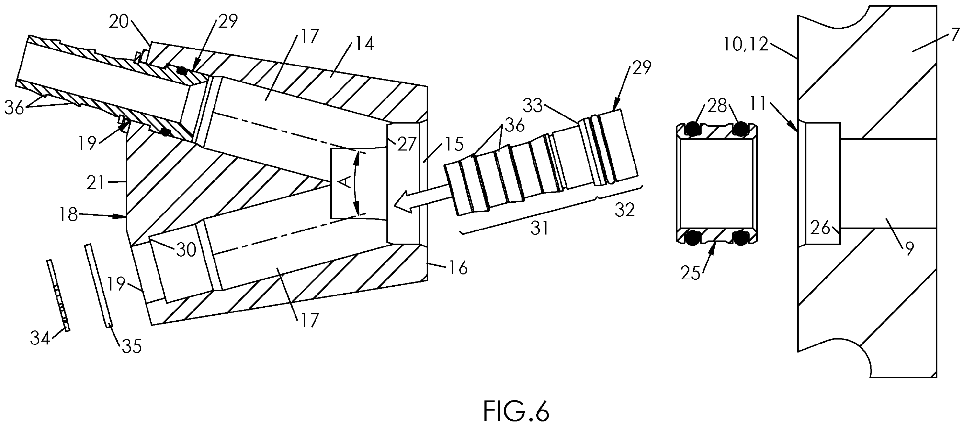

Les canaux **17** d'un même groupe sont de préférence décalés angulairement à partir de l'orifice **15** d'entrée, d'un angle A supérieur ou égal à 10°. Dans l'exemple des figures 4 et 6, où chaque groupe comprend deux canaux **17,** ceux-ci sont décalés angulairement d'un angle A de 30° environ.

Selon un autre mode de réalisation, illustré sur la figure 3, au moins l'un des connecteurs **14** peut comprendre, pour chaque groupe de canaux **17,** trois canaux **17**, qui sont de préférence décalés angulairement, d'un angle A de 15° environ dans l'exemple illustré. On voit sur les figures 2 et 3 qu'il est possible, suivant le nombre d'unités **3** de traitement à connecter fluidiquement au joint **7,** de monter des connecteurs **14** de différentes capacités. En l'espèce, le distributeur comprend six connecteurs **14** à quatre rangées superposées de groupes de deux canaux **17,** et deux connecteurs **14** (diamétralement opposés) à quatre rangées superposées de groupes de trois canaux **17.**

Comme cela est représenté sur la figure 2, la face **18** externe du connecteur **14** est divisée en au moins trois facettes, à savoir deux facettes **20** latérales qui sont décalées angulairement du même angle que les canaux **17** et sur lesquelles débouchent les orifices **11** de sortie des canaux **17,** et une facette **21** centrale entre les deux facettes **20** latérales.

Selon un mode de réalisation préféré, la fixation amovible de chaque connecteur **14** sur la face **10** externe du joint **7** est réalisée au moyen de vis **22** (par exemple une paire de vis **22,** comme illustré sur la figure 5). A cet effet, la facette **21** centrale est percée de trous **23** pour le passage des vis **22,** qui viennent se prendre dans des alésages **24** taraudés pratiqués en regard des trous **23** dans chaque méplat **2** du joint **7**.

Afin de réaliser l'étanchéité de la jonction entre le joint **7** et chaque connecteur **14,** le distributeur **6** comprend pour chaque connexion une bague **25** d'étanchéité, montée à cheval entre chaque orifice **11** de sortie et chaque orifice **15** d'entrée correspondant. Afin de permettre le montage de la bague **25,** l'orifice **11** de sortie du joint **7** et l'orifice **15** d'entrée du connecteur **14** sont munis de lamages **26, 27.** Outre l'étanchéité de la connexion, réalisée au moyen de joints **28** toriques montés dans des gorges périphériques pratiquées dans une face externe de la bague **25,** ce montage garantit une bonne coaxialité de l'orifice **11** de sortie du joint **7** et de l'orifice **15** d'entrée du connecteur **14,** ce qui limite les pertes de charge.

Par ailleurs, comme on le voit bien sur les figures 4 et 6, chaque connecteur **14** comprend, pour chaque canal **17,** un embout **29** d'accouplement du canal **17** à une tubulure **5.**

L'accouplement de l'embout **29** et de la tubulure **5** peut être réalisé par vissage ou encore par encliquetage. Toutefois, dans l'exemple de réalisation illustré, où les tubulures **5** sont souples, l'accouplement est réalisé par simple enfoncement d'une extrémité interne de la tubulure **5** sur l'embout **29.**

Comme on le voit sur les figures 4 et 6, le montage de l'embout **29** est réalisé par l'intérieur du connecteur **14.** A cet effet, le diamètre hors tout du connecteur **14** est inférieur au diamètre interne du canal **17** correspondant, et celui-ci présente intérieurement, du côté de son orifice **19** de sortie, un lamage **30,** autrement dit une restriction de son diamètre interne.

L'embout **29** présente quant à lui une tête **31** et un corps **32** principal séparés par un épaulement **33,** le diamètre de la tête **31** étant supérieur à celui du corps **32.** Une fois l'embout **29** introduit à fond dans le canal **17** dans le sens de la flèche sur la figure 6, son épaulement **33** vient en butée contre le lamage **30,** et son corps **32** fait saillie du connecteur **14** par l'orifice **19** de sortie du canal **17** (cf. sur la figure 4 et en haut sur la figure 6).

Selon un mode de réalisation illustré sur les figures, le maintien rigide de l'embout **29** sur le connecteur **14** est réalisé au moyen d'un circlips **34** reçu dans une gorge périphérique formée dans le corps **32** principal de l'embout **29,** de préférence avec interposition d'une rondelle **35** entre la face **18** externe du connecteur **14** et le circlips **34,** afin de rattraper les jeux et répartir les efforts axiaux.

Par ailleurs, afin de garantir une bonne tenue de chaque tubulure **5** sur le connecteur **14,** le corps **32** de celui-ci peut (comme cela est visible sur les figures 4 et 6) être muni d'un ou plusieurs crans **36** annulaires qui viennent mordre dans la matière souple de la tubulure **5** et freiner (ou empêcher) le retrait de celle-ci. La rigidité du maintien peut être accrue en prévoyant une bague (par exemple à crémaillère et vis sans fin) qui vient serrer la tubulure **5** sur le corps **32** de l'embout **29.**

Le montage du connecteur **14** est illustré sur la figure 6. On commence par introduire les embouts **29** dans leurs canaux **17** respectifs (comme indiqué par la flèche). Chaque embout **29** est enfoncé complètement dans son canal **17** jusqu'à ce que l'épaulement **33** parvienne en butée contre le lamage **30.** On introduit la rondelle **35** sur le corps **32** en venant la plaquer contre la facette **20** ou **21** du connecteur **14,** puis on immobilise l'embout au moyen du circlips **34.** On monte alors le connecteur **14** sur le joint **7,** avec interposition de la bague **25** d'étanchéité montée à cheval entre l'orifice **11** de sortie du joint **7** et l'orifice d'entrée **15** correspondant du connecteur **14.** Puis on fixe le connecteur **14** au joint **7** au moyen des vis **22,** introduites dans les trous **23** puis serrées dans les alésages **24** taraudés du joint **7.** Les tubulures **5** peuvent être raccordées au connecteur **14** soit avant (dans l'idéal), soit après son montage sur le joint **7.**

Le distributeur **6** qui vient d'être décrit présente les avantages suivants.

Premièrement, la présence des connecteurs **14** permet de multiplier les sorties (ou, inversement, les entrées) fluidiques sans qu'il soit nécessaire de multiplier les perçages du joint **7,** au bénéfice de la compacité de celui-ci. Il est ainsi possible de faire circuler un fluide simultanément dans un nombre de tubulures **5** supérieur ou égal à 48 (jusqu'à 96 dans le mode de réalisation illustré, moyennant le montage, sur la périphérie du joint **7**, de huit connecteurs **14** ayant chacun quatre groupes superposés de trois canaux **17**).

Deuxièmement, la présence des connecteurs **14** permet de simplifier le raccordement des tubulures **5** au joint **7** ainsi que leur démontage. Il suffit en effet, pour effectuer ce raccordement, de brancher les tubulures **5** par grappes sur les connecteurs **14,** puis de fixer ceux-ci sur le joint **7.** Cette fixation, réalisée au moyen d'une paire de vis **22,** est simple et rapide. Elle évite un raccordement individuel des tubulures **5** directement sur le joint **7,** qui, outre la multiplication des perçages dans le joint, rendrait complexe la manutention compte tenu de l'accès limité à chaque tubulure.

Troisièmement, le fait de déporter la division (ou le regroupement) des flux au niveau des connecteurs **14** (où l'espace est moins compté) permet de garantir une bonne compacité du joint 7, tout en garantissant un débit fluidique important.

## Revendications

1. Distributeur **(6)** fluidique pour machine **(1)** de remplissage de récipients ou pour machine de formage de récipients, comprenant un joint **(7)** tournant muni d'un alésage **(8)** central pour son raccordement à un arbre **(4)** d'alimentation fluidique de la machine **(1),** et d'une série périphérique de conduits **(9)** percés radialement dans le joint **(7),** chaque conduit **(9)** débouchant sur une face **(10)** externe du joint **(7)** en un orifice **(11)** de sortie ;
**caractérisé en ce qu'**il comporte une série périphérique de connecteurs **(14)** montés de manière amovible sur la face **(10)** externe du joint **(7),** chaque connecteur **(14)** ayant :
- au moins un orifice **(15)** d'entrée en communication fluidique avec un orifice **(11)** de sortie du joint **(7)** tournant ;
- un groupe d'au moins deux canaux **(17)** qui communiquent avec un même orifice **(15)** d'entrée et débouchent sur une face **(18)** externe du connecteur **(14)** en deux orifices **(19)** de sortie distincts,
le distributeur (6) comprenant une bague **(25)** d'étanchéité montée à cheval entre chaque orifice **(11)** de sortie et chaque orifice **(15)** d'entrée correspondant.

2. Distributeur **(6)** selon la revendication 1, **caractérisé en ce que** les canaux **(17)** d'un même groupe sont décalés angulairement.

3. Distributeur **(6)** seion la revendication 2, **caractérisé en ce que** les canaux **(17)** d'un même groupe sont décalés angulairement d'un angle supérieur ou égal à 10°.

4. Distributeur **(6)** selon l'une des revendications précédentes, **caractérisé en ce que** :
- le joint **(7)** tournant comprend des rangées axiales d'orifices **(11)** de sortie, réparties de manière périphérique sur la face **(10)** externe du joint **(7),**
- chaque connecteur **(14)** comprend une rangée axiale d'orifices **(15)** d'entrée et, pour chaque orifice d'entrée **(15),** un groupe de canaux **(17).**

5. Distributeur **(6)** selon l'une des revendications précédentes, **caractérisé en ce que** chaque groupe comprend deux canaux **(17).**

6. Distributeur (**6**) selon la revendication 5, **caractérisé en ce que** les canaux (**17**) d'un même groupe sont décalés angulairement d'un angle de 30° environ.

7. Distributeur (**6**) selon l'une des revendications 1 à 4, **caractérisé en ce que** chaque groupe comprend trois canaux (**17**).

8. Distributeur (**6**) selon la revendication 7, **caractérisé en ce que** les canaux (**17**) d'un même groupe sont décalés angulairement deux à deux d'un angle de 15° environ.

9. Distributeur (**6**) selon l'une des revendications précédentes, **caractérisé en ce que** chaque connecteur (**14**) comprend, pour chaque canal (**17**), un embout (**29**) d'accouplement à une tubulure (**5**) d'acheminement fluidique.

10. Distributeur (**6**) selon la revendication 9, **caractérisé en ce que** :
- chaque canal (**17**) présente intérieurement, du côté de son orifice (**19**) de sortie, un lamage (**30**),
- chaque embout (**29**) est monté intérieurement dans le canal (**17**), et présente un épaulement (**33**) en butée contre le lamage (**30**), et un corps (**32**) principal faisant saillie du connecteur (**14**) par l'orifice (**19**) de sortie du canal (**17**).

11. Distributeur (**6**) selon la revendication 10, **caractérisé en ce que** chaque embout (**29**) est maintenu sur le connecteur (**14**) au moyen d'un circlips (**34**) reçu dans une gorge périphérique formée dans le corps (32) principal de l'embout (**29**).

12. Distributeur (**6**) selon l'une des revendications précédentes, **caractérisé en ce que** la face (**18**) externe du connecteur (**14**) comprend plusieurs facettes sur lesquelles débouchent les orifices (**19**) de sortie des canaux (**17**).

13. Distributeur selon la revendication 12, **caractérisé en ce que** les connecteurs (**14**) sont montés sur la face (**10**) externe du joint (**7**) au moyen de vis (**22**) de fixation passant au travers de trous formés dans des facettes des connecteurs (**14**).

14. Machine (**1**) de traitement de récipients qui comprend un arbre (**4**) central d'alimentation fluidique, un carrousel (**2**) sur lequel sont montées des unités (**13**) de traitement des récipients, et une pluralité de tubulures (**5**) mettant chacune en communication fluidique l'arbre (**4**) central avec une unité (**3**) de traitement, **caractérisée en ce qu'**elle comprend un distributeur (**14**) selon l'une des revendications précédentes, monté en rotation sur l'arbre (**4**) central, et **en ce que** les tubulures (**5**) sont branchées par grappes sur le joint (**7**) par l'intermédiaire des connecteurs (**14**).

## Patentansprüche

1. Fluidverteiler (6) für eine Maschine (1) zur Füllung von Behältern oder für eine Maschine zum Formen von Behältern, umfassend eine mit einer Zentralbohrung (8) für seine Verbindung an eine Hohlwelle (4) zur Fluidversorgung der Maschine (1) versehene Drehdichtung (7) und eine radial in die Dichtung (7) gebohrte umlaufende Reihe von Leitungen (9), wobei jede Leitung (9) an einer Außenseite (10) der Dichtung (7) in einem Ausgangsanschluss (11) mündet;
**dadurch gekennzeichnet, dass** er eine umlaufende Reihe von in abnehmbarer Weise auf der Außenseite (10) der Dichtung (7) montierten Verbindern (14) aufweist, wobei jeder Verbinder (14) Folgendes aufweist:
- mindestens einen Eingangsanschluss (15) in Fluidverbindung mit einem Ausgangsanschluss (11) der Drehdichtung (7);
- eine Gruppe von mindestens zwei Kanälen (17), die mit ein und demselben Eingangsanschluss (15) in Verbindung stehen und an einer Außenseite (18) des Verbinders (14) in zwei verschiedene Ausgangsanschlüsse (19) münden,
wobei der Verteiler (6) einen zwischen jedem Ausgangsanschluss (11) und jedem entsprechenden Eingangsanschluss (15) überbrückend montierten Dichtring (25) umfasst.

2. Verteiler (6) nach Anspruch 1, **dadurch gekennzeichnet, dass** die Kanäle (17) ein und derselben Gruppe winklig versetzt sind.

3. Verteiler (6) nach Anspruch 2, **dadurch gekennzeichnet, dass** die Kanäle (17) ein und derselben Gruppe um einen Winkel größer oder gleich 10° winklig versetzt sind.

4. Verteiler (6) nach einem der vorhergehenden Ansprüche, **dadurch gekennzeichnet, dass**:
- die Drehdichtung (7) in umlaufender Weise auf der Außenseite (10) der Dichtung (7) verteilte axiale Reihen von Ausgangsanschlüssen (11) umfasst,
- jeder Verbinder (14) eine Reihe axialer Eingangsanschlüsse (15) und für jeden Eingangsanschluss (15) eine Kanalgruppe (17) umfasst.

5. Verteiler (6) nach einem der vorhergehenden Ansprüche, **dadurch gekennzeichnet, dass** jede Gruppe zwei Kanäle (17) umfasst.

6. Verteiler (6) nach Anspruch 5, **dadurch gekennzeichnet, dass** die Kanäle (17) ein und derselben Gruppe um einen Winkel von ca. 30° winklig versetzt sind.

7. Verteiler (6) nach einem der Ansprüche 1 bis 4, **dadurch gekennzeichnet, dass** jede Gruppe drei Kanäle (17) umfasst.

8. Verteiler (6) nach Anspruch 7, **dadurch gekennzeichnet, dass** die Kanäle (17) ein und derselben Gruppe um einen Winkel von ca. 15° paarweise winklig versetzt sind.

9. Verteiler (6) nach einem der vorhergehenden Ansprüche, **dadurch gekennzeichnet, dass** jeder Verbinder (14) für jeden Kanal (17) ein Kupplungsansatzstück (29) an einer Rohrleitung (5) für Fluidzuführung umfasst.

10. Verteiler (6) nach Anspruch 9, **dadurch gekennzeichnet, dass**:
- jeder Kanal (17) innen an der Seite seines Ausgangsanschlusses (19) eine Senkung (30) aufweist,
- jedes Ansatzstück (29) innerhalb des Kanals (17) montiert ist und eine Anschlagschulter (33) gegen die Senkung (30) und einen durch den Ausgangsanschluss (19) des Kanals (17) von dem Verbinder (14) vorstehenden Hauptkörper (32) aufweist.

11. Verteiler (6) nach Anspruch 10, **dadurch gekennzeichnet, dass** jedes Ansatzstück (29) auf dem Verbinder (14) mittels eines Sicherungsrings (34) gehalten ist, der in einer in dem Hauptkörper (32) des Ansatzstücks (29) umlaufend geformten Rille aufgenommen ist.

12. Verteiler (6) nach einem der vorhergehenden Ansprüche, **dadurch gekennzeichnet, dass** die Außenseite (18) des Verbinders (14) mehrere Facetten umfasst, an denen die Ausgangsanschlüsse (19) der Kanäle (17) münden.

13. Verteiler nach Anspruch 12, **dadurch gekennzeichnet, dass** die Verbinder (14) auf der Außenseite (10) der Dichtung (7) mittels Befestigungsschrauben (22) montiert sind, die durch in den Facetten der Verbinder (14) gebildete Löcher hindurchgehen.

14. Maschine (1) zur Bearbeitung von Behältern, die eine zentrale Hohlwelle (4) zur Fluidversorgung, einen Drehtisch (2), auf dem Einheiten (3) zur Bearbeitung von Behältern montiert sind, und eine Vielzahl von Rohrleitungen (5) umfasst, die jeweils die zentrale Hohlwelle (4) mit einer Bearbeitungseinheit (3) in Fluidverbindung setzen, **dadurch gekennzeichnet, dass** sie einen drehbar auf der zentralen Hohlwelle (4) montierten Verteiler (6) nach einem der vorhergehenden Ansprüche umfasst, und dass die Rohrleitungen (5) blockweise an der Dichtung (7) mit Hilfe von Verbindern (14) angeschlossen sind.

## Claims

1. Fluid dispenser (6) for a machine (1) for filling or forming containers, comprising a rotating manifold (7) provided with a central bore (8) for connection to a fluid feed shaft (4) of the machine (1), and with a peripheral series of conduits (9) pierced radially in the manifold (7), each conduit (9) opening onto an outer face (10) of the manifold (7) at an outlet orifice (11);
**characterized in that** it comprises a peripheral series of connectors (14) removably mounted on the outer face (10) of the manifold (7), each connector (14) having:
- at least one inlet orifice (15) fluidically connected to an outlet orifice (11) of the rotating manifold (7);
- a group of at least two ducts (17) which communicate with one and the same inlet orifice (15) and open onto an outer face (18) of the connector (14) at two distinct outlet orifices (19),
the dispenser (6) comprising a sealing ring (25) bridging each outlet orifice (11) and each corresponding inlet orifice (15).

2. Dispenser (6) according to Claim 1, **characterized in that** the ducts (17) of one and the same group have an angular offset.

3. Dispenser (6) according to Claim 2, **characterized in that** the ducts (17) of one and the same group have an angular offset of greater than or equal to 10°.

4. Dispenser (6) according to one of the preceding claims, **characterized in that**:
- the rotating manifold (7) comprises axial rows of outlet orifices (11) distributed peripherally over the outer face (10) of the manifold (7),
- each connector (14) comprises an axial row of inlet orifices (15) and, for each inlet orifice (15), a group of ducts (17).

5. Dispenser (6) according to one of the preceding claims, **characterized in that** each group comprises two ducts (17).

6. Dispenser (6) according to Claim 5, **characterized in that** the ducts (17) of one and the same group have an angular offset of approximately 30°.

7. Dispenser (6) according to one of Claims 1 to 4, **characterized in that** each group comprises three ducts (17).

8. Dispenser (6) according to Claim 7, **characterized in that** the ducts (17) of one and the same group have a pairwise angular offset of approximately 15°.

9. Dispenser (6) according to one of the preceding claims, **characterized in that** each connector (14) comprises, for each duct (17), an end piece (29) for coupling to a fluid supply pipe (5).

10. Dispenser (6) according to Claim 9, **characterized in that**:
- each duct (17) has, internally, on the side of its outlet orifice (19), a spot facing (30),
- each end piece (29) is mounted inside the duct (17) and has a shoulder (33) in abutment against the spot facing (30), and a main body (32) projecting from the connector (14) through the outlet orifice (19) of the duct (17).

11. Dispenser (6) according to Claim 10, **characterized in that** each end piece (29) is held on the connector (14) by means of a circlip (34) received in a peripheral channel formed in the main body (32) of the end piece (29).

12. Dispenser (6) according to one of the preceding claims, **characterized in that** the outer face (18) of the connector (14) comprises multiple facets at which the outlet orifices (19) of the ducts (17) open.

13. Dispenser according to Claim 12, **characterized in that** the connectors (14) are mounted on the outer face (10) of the manifold (7) by means of attachment screws (22) passing through holes formed in facets of the connectors (14).

14. Machine (1) for processing containers, which comprises a central fluid supply shaft (4), a carousel (2) on which are mounted units (3) for processing the containers, and a plurality of pipes (5), each fluidically connecting the central shaft (4) to a processing unit (3), **characterized in that** it comprises a dispenser (6) according to one of the preceding claims, which is mounted so as to be able to rotate on the central shaft (4), and **in that** the pipes (5) are connected in bunches to the manifold (7) via the intermediary of the connectors (14) .
